# FASCICULE DE BREVET EUROPEEN

(11) **EP 0 418 372 B1**
(45) Date de publication et mention de la délivrance du brevet: **14.12.1994**
(21) Numéro de dépôt: 90906249.9
(22) Date de dépôt: 28.03.1990
(51) Int. Cl.: G11B 5/127, G11B 5/31, G11B 5/39, G11B 5/17

(54) **TETE MAGNETIQUE DE LECTURE A MAGNETORESISTANCE POUR ENREGISTREMENT PERPENDICULAIRE ET PROCEDE DE REALISATION D'UNE TELLE TETE**
LESE-MAGNETKOPF MIT MAGNETOWIDERSTAND FÜR SENKRECHTE AUFZEICHNUNG UND HERSTELLUNGSVERFAHREN EINES DERARTIGEN KOPFES
MAGNETIC READING HEAD WITH MAGNETORESISTANCE FOR PERPENDICULAR RECORDING AND METHOD FOR MAKING SUCH HEAD

(30) Priorité: 29.03.1989 FR 8904061
(43) Date de publication de la demande: 27.03.1991
(73) Titulaire: COMMISSARIAT A L'ENERGIE ATOMIQUE, 75015 Paris (FR)
(72) Inventeur: LAZZARI, Jean-Pierre, F-38700 Corenc (FR)
(74) Mandataire: Signore, Robert
(86) Numéro de dépôt international: FR9000212
(87) Numéro de publication internationale: WO9011594

(56) Documents cités:
- EP-A- 154 005
- EP-A-03 174 71
- US-A-44 384 70
- PATENT ABSTRACTS OF JAPAN vol. 7, no.6, (P-167)(1151) 11 Jan. 1983& JP-A-57 164416 (FUJITSU K. K.) 09: Oct. 1982, voir le document en entier
- PATENT ABSTRACTS OF JAPAN vol. 8, no. 237 (P-310)(1674) 30 Oct. 1984, & JP-A-59 112421(NIPPON DENKI KK) 28. juin 1984,voir le document en entier
- PATENT ABSTRACTS OF JAPAN vol. 7, no. 212 (P-224)(1357) 20 sept. 1983 &JP-A-58 108025 (NIPPON VICTOR KK) 28 juin 1983, voir le document en entier
- PATENT ABSTRACTS OF JAPAN vol. 10, no. 344 (P-518)(2400) 20 Nov. 1986 &JP-A-61 145720 (FUJITSU KK) 03 juillet 1986, voir le document en entier
- PATENT ABSTRACTS OF JAPAN vol. 10, no. 344 (P-303)(1648) 26 sept. 19684 & JP-A-59 0942218 (TOSHIBA KK) 30 mai 1984, voir le document en entier
- PATENT ABSTRACTS OF JAPAN vol. 6, noo. 233 (P-156)(1111) 19 nov. 1982 & JP-A- 57 133513 (FUJITSU KK) 18 août 1982, voir le document en entier
- I.E.E.E. TRANSACTIONS ON MAGNETICS VOL: 25; no.5, , sept. 1989, New York, N.Y., USA, pages 3686-3688; D. W. CHAPMAN "A NEW APPROACH TO MAKING THIN FILM HEAD-SLIDER DEVICES", voir page 3688, colonne de gauche, alinéas 2-3; figures 6,7
- Patent abstracts of Japan, vol.8, no.211 (P-303)(1648) 26 Septembre 1984 & JP-A-59 094218

## Description

La présente invention a pour objet une tête magnétique de lecture à magnétorésistance pour enregistrement perpendiculaire, ainsi qu'un procédé de réalisation d'une telle tête.

L'invention trouve une application dans la lecture et éventuellement dans l'écriture d'informations sur un support tel qu'un disque ou une bande.

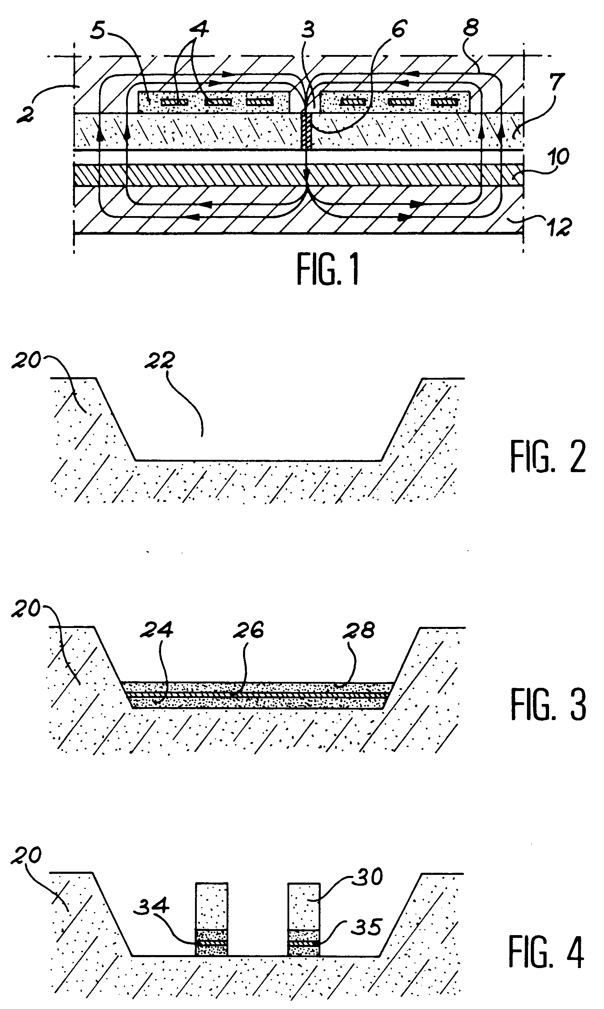

Une tête magnétique connue de lecture et d'écriture de type horizontal pour enregistrement perpendiculaire est représentée sur la figure 1. On y voit une couche magnétique épaisse horizontale 2 présentant une pièce polaire centrale 3, un bobinage conducteur 4 entourant cette pièce polaire et enterré dans une couche isolante 5, un monopole magnétique mince 6 prolongeant la pièce polaire centrale et, enfin, une couche diélectrique dure 7 permettant d'obtenir une surface extérieure plane ("plan de vol").

Le support sur lequel les informations sont écrites et lues est constitué d'une couche magnétique 10 déposée sur un substrat 12. L'ensemble défile devant le monopole 6.

Le fonctionnement d'un tel dispositif est schématiquement le suivant. Le champ magnétique créé par circulation d'un courant dans le bobinage 4 voit ses lignes très resserrées dans le monopole 6 et se diviser pour venir se refermer par les pièces polaires latérales de la couche magnétique épaisse 2. Dans ces conditions, l'induction magnétique dans la zone d'enregistrement de la couche 10 est perpendiculaire à cette couche. C'est pourquoi ces dispositifs sont qualifiés de têtes à enregistrement "perpendiculaire" (ou "vertical"). A la lecture, la variation du flux capté par le monopole induit un courant dans le bobinage.

Une telle tête est décrite dans le brevet américain US-A-4,731,157 délivré par J.P. LAZZARI le 15.03.1988.

Par ailleurs, le document JP-A-5 7164416 divulgue une tête magnétique de lecture pour enregistrement perpendiculaire, comprenant un élément magnétique horizontal présentant une pièce polaire centrale surmontée d'un monopole vertical affleurant à la surface de la tête et un élément magnétorésistant placé dans ce monopole vertical et traversé par le flux capté par le monopole.

Il faut observer accessoirement qu'on connaît une autre catégorie de têtes de lecture et d'écriture conçues pour écrire ou lire une induction magnétique située dans le plan de la couche magnétique. Ces têtes sont dites à enregistrement "longitudinal" (ou "horizontal"). Elles comprennent un circuit magnétique à entrefer. Elles ne jouent pas de rôle direct dans la présente invention.

Indépendamment de cette technologie des têtes à couches minces, on a cherché à constituer des têtes de lecture d'information magnétique à l'aide d'éléments magnétorésistants. On sait qu'une magnétorésistance possède une aimantation dont la direction peut tourner sous l'effet d'un champ magnétique extérieur. Cette rotation s'accompagne d'une variation ΔR de la résistance R de la couche. Cette résistance peut être mesurée en faisant passer un faible courant dans la couche. En pratique, pour une couche de fer-nickel d'épaisseur 0,1 µm, la variation de résistance est d'environ 1% lorsque l'angle de l'aimantation tourne de 90°.

Pour augmenter la sensibilité de la mesure et améliorer la linéarité, on peut orienter préalablement l'aimantation de la couche magnétorésistante à 45° des lignes de courant.

Le brevet américain US-A-4,703,378 décrit un tel dispositif à magnétorésistance, laquelle est placée sous un intervalle interrompant un circuit magnétique formant un entrefer.

De même, le document de brevet européen EP-A-284 495 décrit un dispositif à deux magnétorésistances placées à l'arrière d'un circuit magnétique définissant un entrefer.

Dans tous les cas, il s'agit de têtes pour enregistrement longitudinal, c'est-à-dire avec entrefer. On ne connaît pas de dispositif à enregistrement perpendiculaire muni de magnétorésistance.

La présente invention vise justement à remédier à cette carence en proposant une tête à couches minces pour enregistrement perpendiculaire avec élément magnétorésistant. Or, dans le cas des têtes à enregistrement perpendiculaire, la présence du monopole rend l'introduction d'une magnétorésistance délicate, et l'on ne peut plus utiliser les moyens propres aux têtes à entrefer.

La présente invention définie dans la revendication 1 résout cette difficulté par l'utilisation d'un élément magnétorésistant en forme de U disposé dans deux intervalles ménagés dans la couche magnétique, les deux rubans constituant les deux branches du U étant parallèles au monopole. Ces deux rubans sont par ailleurs réunis par un pont également magnétorésistant.

Une telle tête constitue seulement un moyen de lecture. Mais il est toujours possible de lui adjoindre un bobinage conducteur pour obtenir simultanément un dispositif d'écriture.

La présente invention a également pour objet un procédé de réalisation d'une telle tête.

De toute façon, les caractéristiques de l'invention apparaîtront mieux à la lumière de la description qui va suivre. Cette description porte sur des exemples de réalisation donnés à titre explicatif et nullement limitatif et elle se réfère à des dessins annexés sur lesquels :
- la figure 1, déjà décrite, illustre une tête magnétique à enregistrement perpendiculaire selon l'art antérieur,
- la figure 2 montre une première étape du procédé de réalisation selon l'invention,
- la figure 3 montre une deuxième étape du procédé consistant en un dépôt de couches,
- la figure 4 montre, en coupe, un motif gravé,
- la figure 5 montre ce motif en perspective,
- la figure 6 illustre le dépôt d'un isolant sur les parois latérales du motif,
- la figure 7 montre une étape supplémentaire de constitution d'une couche magnétique épaisse,
- la figure 8 montre une coupe de la tête finalement obtenue,
- la figure 9 montre cette tête en vue de dessus,
- la figure 10 montre schématiquement la répartition du flux magnétique de lecture,
- la figure 11 montre l'orientation de l'aimantation dans la couche magnétorésistante au repos,
- la figure 12 montre les rotations opposées de cette aimantation dans le cas d'une lecture différentielle,
- la figure 13 montre les variations de résistance des deux rubans magnétorésistants dues à ces rotations,
- la figure 14 montre schématiquement les lignes d'un champ de polarisation,
- la figure 15 illustre la rotation de l'aimantation dans une lecture en série,
- la figure 16 montre la variation de résistance de chacun des rubans magnétorésistants due à cette rotation,
- la figure 17 (a, b, c, d) illustre quatre branchements possibles pour le bobinage conducteur et l'élément magnétorésistant.

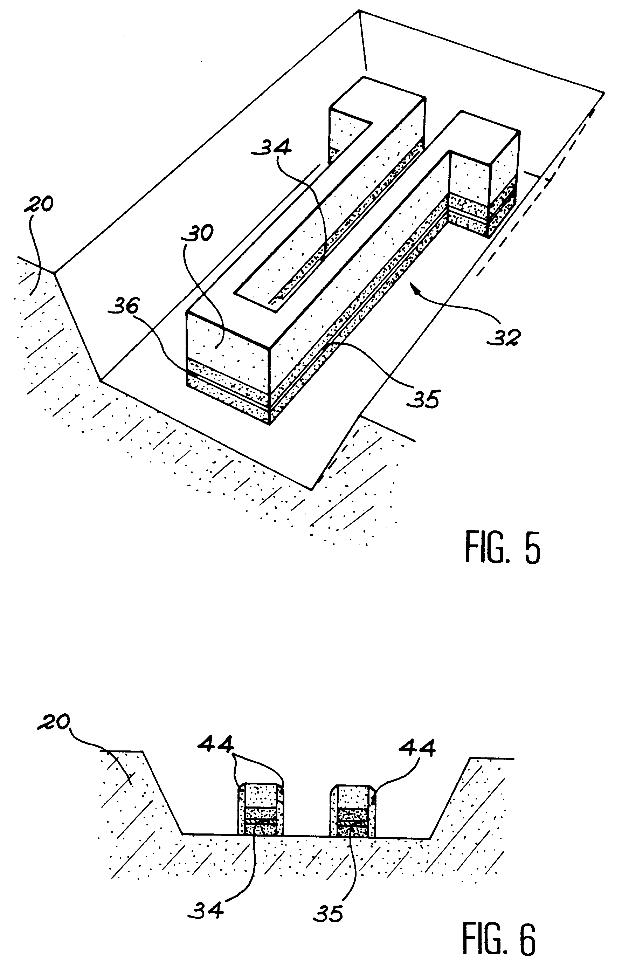

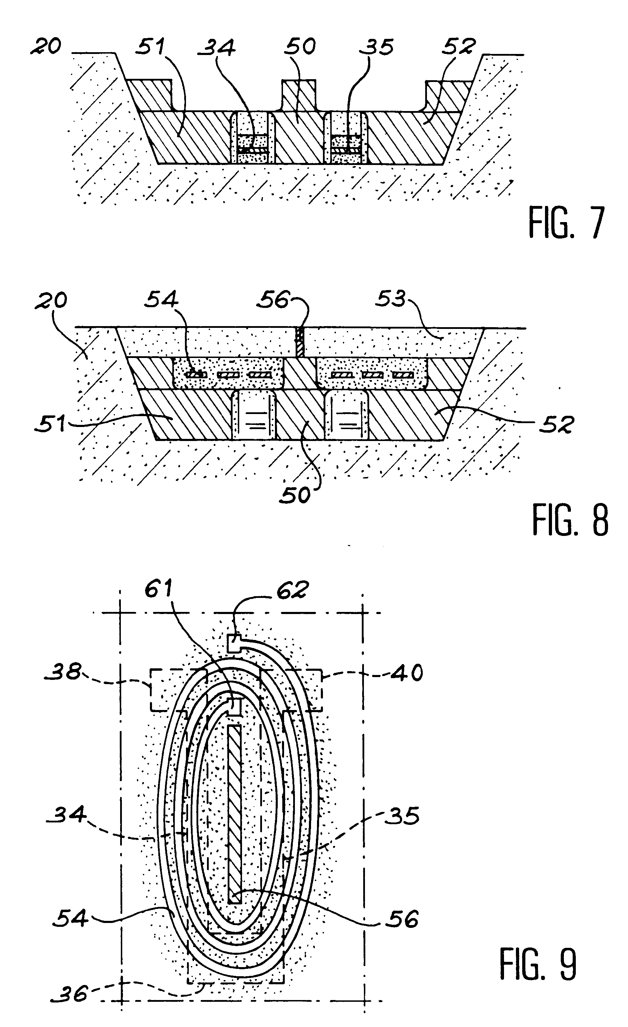

Les figures 2 à 8 montrent diverses étapes d'un procédé de réalisation d'une tête de lecture et d'écriture conforme à l'invention :
- dans un substrat semi-conducteur 20, par exemple en silicium, on creuse un caisson 22 (figure 2),
- au fond de ce caisson 22 on dépose un ensemble de trois couches constituées par une première couche isolante 24, par exemple en silice SiO₂, par une couche de matériau magnétorésistant 26, par exemple en fer-nickel, et par une seconde couche isolante 28, par exemple en silice (figure 3),
- on grave cet ensemble de trois couches avec un masque de résine 30 (figure 4) pour obtenir un motif en U, référencé 32 (figure 5), avec deux branches contenant deux rubans magnétorésistants 34 et 35 et un pont magnétorésistant 36 ; dans cette opération de gravure, on prend garde de ne pas dissoudre la résine 30 qui a servi de masquage,
- on dépose sur les parois latérales de ce motif gravé une couche isolante verticale 44 (figure 6) et ce, par une technique décrite dans le brevet américain US-A-4,731,157 déjà cité ; ces couches peuvent avoir 0,2 ou 0,3 µm d'épaisseur,
- on comble une partie du caisson par une couche magnétique d'épaisseur de 2 à 5 µm pour obtenir une pièce polaire centrale 50 entre les deux rubans 34, 35 et deux zones latérales 51, 52 de part et d'autre du motif (figure 7) ; cette opération peut s'effectuer par dépôt électrolytique, comme décrit par exemple dans la demande de brevet européen EP-A-0 262 028 (ou son correspondant américain US-A-4,837,924), à l'aide d'une couche conductrice formant électrode, soit en utilisant le substrat 20 comme électrode s'il est suffisamment conducteur,
- on constitue un monopole 56 au-dessus de la pièce polaire centrale 50, comme décrit dans le brevet américain US-A-4,731,157 et on comble l'ensemble de part et d'autre du monopole par un matériau diélectrique dur 53, de la silice par exemple et on planarise (figure 8).

Pour obtenir une tête pouvant servir à l'écriture en plus de la lecture, on formera un bobinage conducteur 54 comme illustré sur la figure 8, en utilisant la technique décrite dans le brevet américain susvisé. Dans le cas contraire, on limitera la couche magnétique déposée par électrolyse jusqu'à ce qu'elle affleure en haut de la couche de résine 30 et l'on formera ensuite le monopole vertical, ce qui réduira un peu la hauteur de la tête.

La figure 9 montre, en vue de dessus, la tête obtenue dans la variante à bobinage. Cette figure fait apparaître les deux plots de connexion 38 et 40 pris aux extrémités libres des deux rubans 34 et 35. Ces connexions sont prises à travers la résine 30 et la couche isolante supérieure 28 (cf figures 4 et 5).

On peut également prendre un contact sur le pont 36 pour obtenir un fonctionnement différentiel comme on le comprendra mieux par la suite.

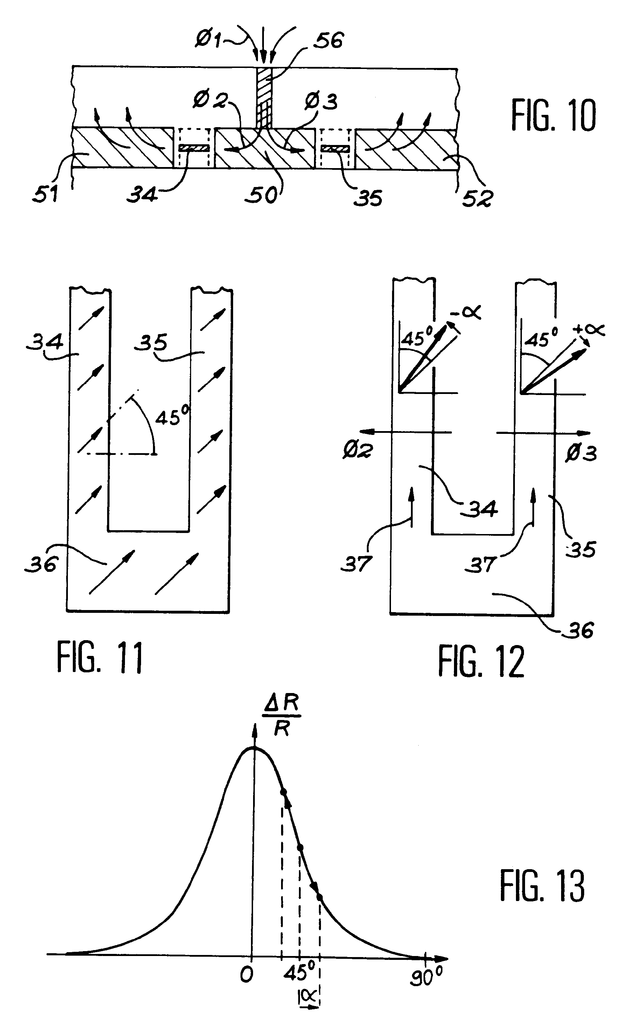

Les figures 10 à 13 illustrent le fonctionnement de la tête à la lecture, dans un mode que l'on peut qualifier de différentiel.

Sur la figure 10, où certains moyens annexes n'ont pas été représentés par simplification, on voit que le flux de fuite φ1 provenant de la couche d'enregistrement défilant devant la tête est capté par le monopole 56 et se divise en deux flux φ2, φ3 dirigés selon des directions opposées. Ces flux traversent les rubans magnétorésistants 34, 35.

On observera que l'épaisseur de la couche magnétorésistante (environ 0,1 µm) est beaucoup plus faible que celle de la couche magnétique (50, 51, 52) (de 2 à 5 µm), de sorte que le champ correspondant aux flux φ2 et φ3 crée une induction intense dans la couche magnétorésistante. Ceci aura pour effet de faire tourner l'aimantation de la couche magnétorésistante. Au repos, c'est-à-dire en dehors de tout champ extérieur, l'induction magnétique dans la couche magnétorésistante est à 45° par rapport à l'axe du monopole (figure 11). Cette direction d'aimantation, donnée par l'anisotropie magnétocristalline lors de la croissance de la couche mince magnétorésistante 26 est contrecarrée par l'anisotropie due à la forme en ruban des éléments magnétorésistants; cette seconde anisotropie, supérieure à la précédente, a tendance à orienter l'aimantation au repos dans le sens de la longueur des rubans. Cependant, lorsque la couche épaisse de fer-nickel 50, 51, 52 est réalisée, elle entoure très étroitement les rubans magnétoresistants, puisqu'elle n'est séparée d'eux que par les murs isolants 44 (cf figure 6) dont l'épaisseur est de 0,2 à 0,3 µm. De ce fait, la couche mince constituant les rubans magnétorésistants est très couplée à la couche épaisse de fer-nickel, ce qui minimise les champs démagnétisants sur les bords du ruban et réduit considérablement l'importance de l'anisotropie de forme.

Dès lors, l'orientation de l'aimantation dans la couche magnétorésistante est bien à 45° comme illustré sur la figure 11.

Le basculement de l'aimantation provoqué par les flux φ2 et φ3 est illustré sur la figure 12 : l'aimantation tourne de -α dans la branche 34 et de + α dans la branche 35. Un courant 37 circulant dans les deux branches permettra de lire deux résistances différentes correspondant aux résistances du matériau pour des orientations (45- α)° et (45+ α)°.

La variation relative de cette résistance, soit ΔR/R, est représentée sur la figure 13. La résistance augmente dans la branche de gauche et diminue dans la branche de droite. En connectant un amplificateur différentiel entre les extrémités des rubans 34 et 35, par rapport à la sortie commune 36, l'excursion de mesure sera doublée par rapport à la variation intrinsèque de résistance du matériau magnétorésistant.

En revanche, un flux magnétique parasite venant de l'extérieur aura la même direction dans les deux branches de l'élément magnétorésistant et ne perturbera pas la mesure.

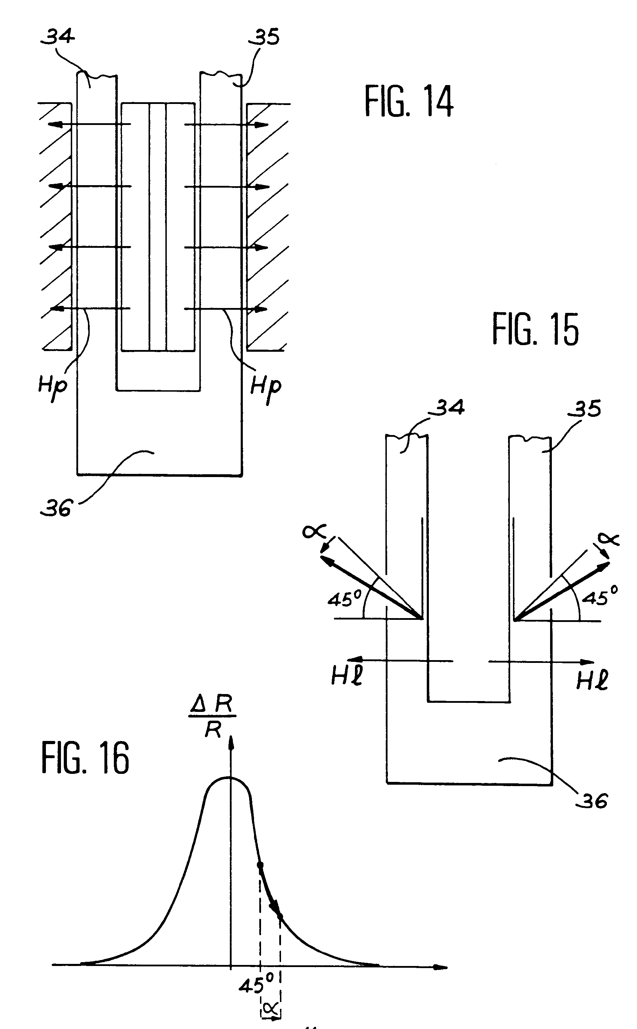

Un second mode d'utilisation du dispositif de l'invention peut être retenu, qui est illustré sur les figures 14 à 16. Dans ce cas, on fait passer un faible courant dans le bobinage conducteur 54 (cf figure 8) servant à l'écriture (la tête doit donc être conçue avec un tel bobinage, c'est-à-dire à la fois comme tête de lecture et tête d'écriture). Le champ de polarisation Hp prend des directions opposées (figure 14). Ce faible courant impose une aimantation dans la couche magnétorésistante, qui est toujours à 45° de l'axe du monopole, mais est orientée dans des directions différentes dans les deux branches de l'élément magnétorésistant (Figure 15).

Dès lors, un champ de lecture Hl, fera basculer l'aimantation d'un angle α de la même manière dans les deux branches (Figure 15). La variation relative de résistance ΔR/R due à la rotation d'angle sera alors la même dans les deux branches.

Dans ce cas, il n'y a plus de mode commun, comme en montage différentiel, mais au contraire deux moyens identiques montés en série. Cette variante présente l'avantage de ne plus nécessiter de troisième plot de connexion sur le pont 36. Les deux plots pris aux extrémités libres des rubans 34 et 35 suffisent.

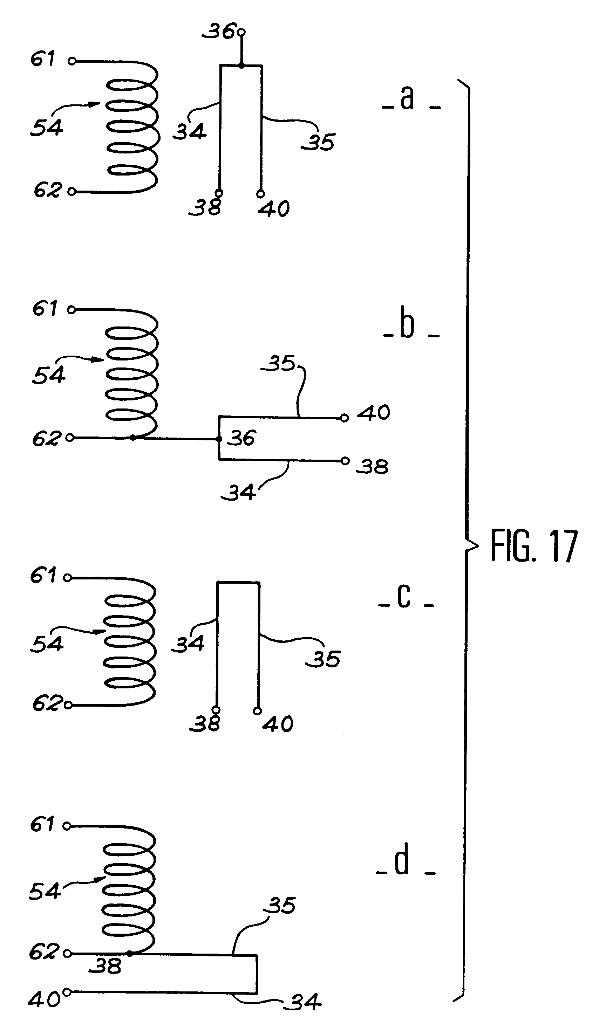

La figure 17 montre quelques modes de connexions des diverses entrées-sorties de la tête.

Sur la partie (a), les bornes 61, 62 du bobinage conducteur 54 sont indépendantes des trois bornes 36, 38, 40 de l'élément magnétorésistant 34, 35. Ce dernier est connecté pour un fonctionnement en différentiel avec trois connexions.

Sur la partie (b), la connexion 36 de l'élément magnétorésistant est reliée à l'une des bornes 62 du bobinage conducteur 54, toujours dans un mode de fonctionnement différentiel.

Sur la partie (c) l'élément magnétorésistant ne présente que deux connexions, pour un fonctionnement en série et les connexions du bobinage sont indépendantes des connexions de l'élément magnétorésistant.

Sur la partie (d) enfin, les bornes 38 et 62 sont réunies entre elles et l'élément magnétorésistant fonctionne en série.

## Revendications

1. Tête magnétique pour lire des enregistrements perpendiculaires, comprenant un élément magnétique horizontal (50, 51, 52) surmonté d'un monopole mince vertical (56) affleurant à la surface de la tête, et un élément magnétorésistant traversé par le flux capté par le monopole (56), les deux extrémités de cet élément magnétorésistant étant reliées à des plots de connexion (38, 40) constituant les sorties de lecture de la tête, cette tête étant caractérisée par le fait qu'une couche magnétique déposée sur un substrat semiconducteur (20) et formant l'élément horizontal (50, 51, 52) est interrompue par deux intervalles disposés symétriquement par rapport au plan du monopole (56) et que l'élément magnétorésistant est en forme de U constitué de deux rubans (34, 35) parallèles au monopole (56) et disposés respectivement dans les deux intervalles de la couche magnétique et d'un pont (36) reliant les deux rubans (34, 35).

2. Tête magnétique selon la revendication 1, caractérisée par le fait que le pont (36) reliant les deux rubans magnétorésistants est relié à une troisième sortie de lecture (36).

3. Tête magnétique selon la revendication 1, caractérisée par le fait qu'elle comprend en outre un bobinage conducteur (54) entourant la pièce polaire centrale (50) et relié à deux sorties d'écriture (61, 62), la tête étant ainsi une tête de lecture et d'écriture.

4. Tête magnétique selon la revendication 3, caractérisée par le fait que l'une des sorties (62) d'écriture du bobinage conducteur (54) est reliée à l'une (36, 38, 40) des sorties de lecture de l'élément magnétorésistant.

5. Procédé de réalisation d'une tête magnétique de lecture selon la revendication 1, caractérisé par le fait qu'il comprend les opérations suivantes :
- dans un substrat semi-conducteur (20) on creuse un caisson (22),
- au fond de ce caisson (22), on dépose un ensemble de trois couches constituées par une première couche isolante (24), une couche de matériau magnétorésistant (26) et une seconde couche isolante (28),
- on grave cet ensemble de trois couches sous forme d'un motif (32) en forme de U avec deux branches contenant deux rubans (34, 35) et un pont (36) reliant les deux rubans,
- on dépose sur les parois latérales de ce motif gravé (32) des couches isolantes verticales (44),
- on comble une partie du caisson par une couche magnétique pour obtenir une pièce centrale (50) entres les deux rubans (34, 35) et deux pièces latérales (51, 52) de part et d'autre du motif (32),
- on constitue un monopole (56) au-dessus de la pièce centrale (50),
- on comble l'ensemble de part et d'autre du monopole par un matériau diélectrique (53).

6. Procédé selon la revendication 5, caractérisé par le fait qu'on forme en outre un bobinage conducteur (54) entourant la pièce polaire centrale (50) et le monopole (56), avec des bornes de sortie (61, 62), la tête obtenue étant alors une tête de lecture et d'écriture.

## Patentansprüche

1. Lese-Magnetkopf für senkrechte Aufzeichnungen, umfassend ein horizontales, magnetisches Element (50, 51, 52), auf dem ein dünner, vertikaler Monopol (56) angebracht ist, der die Oberfläche des Kopfs anrührt, und ein Magnetowiderstandselement, das von dem durch den Monopol (56) erfaßten Fluß durchquert ist, wobei die zwei Enden dieses Magnetowiderstandselements mit Anschlußklemmen (38, 40) verbunden sind, die die Leseausgänge des Kopfes bilden, wobei dieser Kopf **dadurch** **gekennzeichnet ist**, daß eine magnetische Schicht, die auf einem Halbleitersubstrat (20) abgesetzt ist und das horizontale Element (50, 51, 52) bildet, von zwei Intervallen unterbrochen ist, die symmetrisch in bezug auf die Ebene des Monopols (56) angeordnet sind, und daß das Magnetowiderstandselement in U-Form ist, die von zwei zu dem Monopol (56) parallelen und jeweils in den zwei Intervallen der magnetischen Schicht angeordneten Streifen (34, 35) und von einer Brücke (36) gebildet ist, die die zwei Streifen (34, 35) verbindet.

2. Magnetkopf gemäß Anspruch 1, **dadurch gekennzeichnet**, daß die die zwei Magnetowiderstandsstreifen verbindende Brücke (36) mit einem dritten Leseausgang (36) verbunden ist.

3. Magnetkopf gemäß Anspruch 1, **dadurch gekennzeichnet**, daß er ferner eine leitende Wicklung (54) umfaßt, die das mittlere Polstück (50) umgibt und mit zwei Schreibausgängen (61, 62) verbunden ist, wobei der Kopf somit ein Lese- und Schreibkopf ist.

4. Magnetkopf gemäß Anspruch 3, **dadurch gekennzeichnet**, daß einer der Schreibausgänge (62) der leitenden Wicklung (54) mit einem (36, 38, 40) der Leseausgänge des Magneten-Widerstandselement verbunden ist.

5. Verfahren zur Herstellung eines magnetischen Lesekopfs gemäß Anspruch 1, **dadurch gekennzeichnet**, daß es die folgenden Vorgänge umfaßt:
- man hebt in einem Halbleitersubstrat (20) eine Vertiefung (22) aus,
- man setzt auf den Boden dieser Vertiefung (22) eine Gesamtheit aus drei Schichten ab, die von einer ersten, isolierenden Schicht (24), einer Schicht aus einem Magnetowiderstandsmaterial (26) und einer zweiten, isolierenden Schicht (28) gebildet ist,
- man ätzt diese Gesamtheit von drei Schichten in der Form eines Musters (32) in U-Form mit zwei Schenkeln, die zwei Streifen (34, 35) und eine die zwei Streifen verbindende Brücke (36) enthält,
- man setzt auf den Seitenwänden dieses geätzten Musters (32) isolierende, vertikale Schichten (44) ab,
- man füllt einen Teil der Vertiefung mit einer magnetischen Schicht, um ein mittleres Teil (50) zwischen den zwei Streifen (34, 35) und zwei seitliche Teile (51, 52) auf beiden Seiten des Musters (32) zu erhalten,
- man bildet einen Monopol (56) oberhalb des mittleren Teils (50),
- man überdeckt die Gesamtheit beidseitig des Monopols mit einem dielektrischen Material (53).

6. Verfahren gemäß Anspruch 5, **dadurch gekennzeichnet**, daß man ferner eine leitende Wicklung (54), die das mittlere Polstück (50) und den Monopol (56) umgibt, mit Ausgangsanschlüssen (61, 62) bildet, wobei der erhaltene Kopf dann ein Lese- und Schreibkopf ist.

## Claims

1. Magnetic head for reading perpendicular recordings, comprising a horizontal magnetic element (50, 51, 52) surmounted by a thin, vertical monopole (56) flush with the surface of the head, and a magnetoresistant element traversed by the flux trapped by the monopole (56), the two ends of said magnetoresistant element being connected to connection elements (38, 40) constituting the reading outputs of the head, said head being characterized in that a magnetic layer deposited on a semiconductor substrate (20) and forming the horizontal element (50, 51, 52) is interrupted by two gaps arranged symmetrically with respect to the plane of the monopole (56) and that the magnetoresistant element is U-shaped being constituted by two ribbons (34, 35) parallel to the monopole (56) and respectively located in the two gaps of the magnetic layer and a bridge (36) connecting the two ribbons.

2. Magnetic head according to claim 1, characterized in that the bridge (36) connecting the two magnetoresistant ribbons is connected to a third reading output (36).

3. Magnetic head according to claim 1, characterized in that it also comprises a conductor coil (54) surrounding the central pole piece (50) and connected to two writing outputs (61, 62), so that the head is consequently a reading and writing head.

4. Magnetic head according to claim 3, characterized in that one of the writing outputs (62) of the conductor coil (54) is connected to one (36, 38, 40) of the reading outputs of the magnetoresistant element.

5. Process for producing a magnetic reading head according to claim 1, characterized in that it comprises forming a recess (22) in a semiconductor substrate (20), depositing three layers constituted by a first insulating layer (24), a magnetoresistant material layer (26) and a second insulating layer (28) at the bottom of said recess (22), etching said three layers in the form of a U-shaped pattern (32) with two branches containing two magnetoresistant ribbons (34, 35) and a magnetoresistant bridge (36) connecting the two ribbons, the deposition on the side walls of said etched pattern (32) of vertical insulating layers (44), the filling of part of the recess with a magnetic layer in order to obtain a central pole piece (50) between the two ribbons (34, 35) and two lateral pole pieces (51, 52) on either side of the pattern (32), a monopole (56) is formed above the central pole piece (50) and the area on either side of the monopole is filled with a dielectric material (53).

6. Process according to claim 5, characterized in that formation also takes place of a conductor coil (54) surrounding the central pole piece (50) and the monopole (56), which output terminals (62, 62), the head obtained then being a reading and writing head.
